(19) Europäisches Patentamt
European Patent Office
Office européen des brevets

(11) **EP 4 756 375 A1**

(12) **EUROPEAN PATENT APPLICATION**

(43) Date of publication:
**10.06.2026 Bulletin 2026/24**

(21) Application number: **24217375.5**

(22) Date of filing: **04.12.2024**

(51) International Patent Classification (IPC):
*G01C 21/00* $^{(2006.01)}$

(52) Cooperative Patent Classification (CPC):
**G01C 21/3841; G01C 21/3811**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **VOLKSWAGEN AG**
**38440 Wolfsburg (DE)**

(72) Inventors:
• **Wappler, Dr. Stefan**
**38440 Wolfsburg (DE)**
• **Mendoza, Dr. Ricardo Carillo**
**38440 Wolfsburg (DE)**

(54) **METHOD FOR COMPARING A MAPPING QUALITY OF A PAIR OF MAPS REPRESENTING A BORDERED TRAFFIC AREA**

(57) The invention discloses a Method for comparing a mapping quality of a pair of maps (8, 10) each of which representing a bordered traffic area (1), one map of said pair being defined as a reference map (10) and the other map being defined as a probe map (8), each map (8, 10) containing a plurality of data objects (6, 6p, 6r) associated with corresponding fixed objects (4) of a bordered traffic area (1), wherein at least for one map (8, 10) of said pair of maps, said data objects (6, 6p, 6r) are based on a number of data collections performed by respective vehicles (mv1, mv2) when driving through said bordered traffic area (1), wherein for each map (8, 10) of said pair, the map (8, 10) is given as or converted into a respective grid map (12) containing a multiplicity of regular grid cells (g), said data objects (6, 6p, 6r) being represented as occupied grid cells, a first set (14) of grid cells (g) is defined, said first set (14) at least containing all occupied grid cells, wherein for each grid cell (g0) of the first set (14), a respective local influence field (fp, fr) is determined on the basis of occupied grid cells in a defined vicinity of the corresponding grid cell (g0), the local influence field (fp, fr) having a respective first field component (fp1, fr1) and second field component (fp2, fr2). Respective comparison functions are applied to the respective first field components (fp1, fr1) of the local influence fields (fp,fr) of the reference map (10) and the probe map (8) and to the respective second field components (fp2, fr2) of the local influence fields (fp, fr) of the reference map (10) and the probe map (8), yielding a first field component similarity value (sim1) and a second field component similarity value (sim2), respectively, and said first field component similarity value (sim1) and said second field component similarity value (sim2) are combined to a joint similarity value (Fsim) representing a difference in a mapping quality of the reference map (10) with respect to the probe map (8).

Fig. 3

EP 4 756 375 A1

**EP 4 756 375 A1**

**Description**

The invention is related to a method for comparing a mapping quality of a pair of maps, each of which representing a bordered traffic area, each map containing a number of data objects associated with a corresponding fixed object of a bordered traffic area, wherein at least for one map of said pair, said data object is based on a number of data collections performed by respective vehicles when driving through said bordered traffic area.

Motor vehicles are increasingly equipped with driver assistance systems (DAS) for a variety of specific driving situations, ranging from warning systems such as lane departure warning systems to so-called advanced DAS such as adaptive cruise control or intelligent parking assist systems, among others. A common denominator of these DAS is the acquisition of spatial information about the surroundings of a motor vehicle at a given point in time by means of a number of environment sensors, and an evaluation of the data gathered by said environment sensors in order to assess the specific driving situation regarding relevant objects for the particular DAS. The environment sensors typically are given by Radar-based and/or Lidar-based sensors, and/or cameras or similar optical sensors.

In the increasing autonomy levels of DAS, the motor vehicles are operated with increasing degrees of automatization of more and more driving functions. One major goal is to achieve the so-called "Level 5" corresponding to a fully automatic driving operation in a specific traffic situation and/or traffic area without any need of driver supervision or even attention. To this end, very detailed geographical (and geometrical) information, i.e., driving maps, are required for said automatic operation. While such information can be easily obtained by the use of satellite image data for most roads and streets, opening the possibility to automatically navigate a motor vehicle along a virtual map corresponding to such a satellite image by means of GPS and said optical sensors (the latter ensuring lane keeping etc.), this information is typically not available for indoor spaces such as indoor parking lots, or may be noisy in spaces between high buildings. However, the process of parking a motor vehicle is one very prominent objective of current developments in the field, as the entire parking process with its standardized motions and the typical low speeds and few moving vehicles on a parking lot appear among the most promising driving processes for reaching full autonomy, i.e., Level 5, without any compromise on the safety.

To this end, one possible approach might be to derive a map from a parking lot (in particular, an indoor parking lot) from the sensor data of a multitude of motor vehicles driving through said parking lot, e.g., by generating so-called single drive maps (SDM) from each drive of a motor vehicle through at least a portion of the parking lot, said SDM containing relevant object of the parking lot such as walls or poles, and joining these SDMs together in order to have more robust information on these objects, as well as to fill blank spaces where no motor vehicle has been driving yet, and thus, no sensor data at all exists.

One of the challenges of this approach is that typical GPS systems for positioning the respective motor vehicle with respect to a reference frame (in order to align the motor vehicle's SDM using the reference frame) normally stop working at a certain point. Thus, the information for linking collected sensor and image data to the reference frame is lost. However, this loss is independent for different motor vehicles. Similar problems may arise in other bordered traffic areas whenever a GPS signal or the like are disturbed by the surroundings (e.g., large metal objects close to the bordered traffic area). There exist methods for aligning and fusion different SDMs, but often, it is difficult to assess their "mapping quality", i.e., whether objects like walls or poles in the bordered traffic area are being properly represented, in particular regarding their shape, as most of the metrics to assess such a mapping quality (and thus, to evaluate the overall performance of an algorithm for alignment and/or fusing, or to assess proper convergence of such an algorithm) are based on point-wise distance measures that do not take into account whether morphology of the underlying objects is properly represented.

It is therefore an object of the invention to provide a method for comparing a mapping quality of a pair of maps representing a bordered traffic area which allows for an assessment of a quality of the morphological representation of fixed object in said bordered traffic area.

According to the invention, this objective is achieved by a Method for comparing a mapping quality of a pair of maps each of which representing a bordered traffic area, one map of said pair being defined as a reference map and the other map being defined as a probe map, each map containing a plurality of data objects associated with corresponding fixed objects of a bordered traffic area, wherein at least for on map of said pair of maps, said data objects are based on a number of data collections performed by respective vehicles when driving through said bordered traffic area, wherein for each map of said pair, the map is given as or converted into a respective grid map containing a multiplicity of regular grid cells, said data objects being represented as occupied grid cells, a first set of grid cells is defined, said first set at least containing all occupied grid cells, and wherein for each grid cell of the first set, a respective local influence field is determined on the basis of occupied grid cells in a defined vicinity of the corresponding grid cell, the local influence field having a respective first field component and second field component for each grid cell of the first set.

According to the method, respective comparison functions are applied to the respective first field components of the local influence fields of the reference map and the probe map and to the respective second field components of the local influence fields of the reference map and the probe map, yielding a first field component similarity value and a second field component similarity value, respectively, and wherein said first field component similarity value and said second field

2

component similarity value are combined to a joint similarity value representing a difference in a mapping quality of the reference map with respect to the probe map. Embodiments of particular advantage, and which may be inventive in their own right, are given in the dependent claims and in the following description.

The notion of a bordered traffic area in particular comprises any traffic area, i.e., an area configured and designed to host the traffic of motor vehicles (e.g., by pavement and possibly further preparations and/or installation) that has a physical border with respect to its surroundings, or that by design can be restricted to a space within virtual boundaries. In particular, a bordered traffic area may be given by a parking lot.

The pair of maps consisting of the reference map and the probe map represent the bordered traffic area in a sense that either map depicts a spatial distribution (i.e., positioning information) of non-moving physical objects such as walls or poles of the bordered traffic area and possibly of non-moving virtual objects such as parking slots in the bordered traffic area (the physical and virtual objects are comprised in said "fixed" objects), wherein due to different driving paths encountering slightly different obstacles, or also due to different effects of measurement inacuracy on the data collection processes, the two maps typically have differences in the depicted spatial information. Then, the fixed objects, in which said physical and virtual objects are comprised, are preferably represented as said data objects associated with the respecting underlying fixed objects.

The assignment of the roles of the reference map and of the probe map to the pair may be given from a higher order application such as a method for an alignment or a fusion of maps (wherein, e.g., a master map of the alignment and/or the fusion process is assigned as the reference map, and a slave map is assigned as the probe map), or may be chosen from other suitable criteria.

At least one map from the pair, i.e., at least one map out of the reference map and the probe map, is based on a number of data collections performed by respective vehicles when driving through said bordered traffic area. In particular, this comprises that the corresponding map may be given as a so-called single drive map (SDM) in the sense that the map has been generated by using sensors of a motor vehicle which has been driving through said bordered traffic area, preferably during one continuous drive of said motor vehicle through the bordered traffic area (when the same motor vehicle passes through said bordered traffic area on different occasions, preferably, a new SDM is generated each time). However, this may also comprise that the corresponding map (and their spatial and positioning information) may be obtained from a plurality of SDMs by fusing, and possibly by a prior alignment of several of said SDMs. In particular, both maps of the pair may be based on respective sets of SDMs, e.g., as intermediate maps of an alignment and/or a fusion process for said SDMs at different steps of said process (possibly in order to check for convergence).

The SDM is preferably generated from a data collection during said drive-through of a motor vehicle in the bordered traffic area. The data collection preferably comprises collecting positioning information data on said fixed objects by means of a number of radar sensors and/or a number of lidar sensors and/or a number of cameras of the respective motor vehicle, and further comprises a corresponding evaluation of the collected sensor data with respect to a relative position and/or a relative distance to the motor vehicle.

A classification of an object type of fixed object related to a data object (e.g., whether it is a pole or a wall), may be performed, either on the level of a map in said pair of maps, or may be performed on the SDM level. The positioning information in a map out of said pair and/or in an underlying SDM may be given as a relative positioning information, obtained via odometry data of the motor vehicle(s) while driving through the bordered traffic area. In particular, said relative positioning information may be given without any direct link to any reference frame, e.g., given by GPS or similar absolute positioning data. At least one map out of the pair may have interpolated data on inferred boundaries of the fixed objects, i.e., possibly sparse or otherwise incomplete data on a specific fixed object is interpolated to have the entire extension of the fixed object covered in the corresponding data object.

Both the reference map and the probe map are either given by a grid map each containing a multiplicity of regular grid cells at the beginning of the process (e.g., as respective intermediate maps from said higher order alignment and/or fusion process), or are converted into such grid maps. The data objects in these grid maps are represented as occupied grid cells, i.e., a data object is represented by preferably all of the grid cells which are covered by said data object being labelled as "occupied" grid cells. In case that the data objects are depicted with an uncertainty area accounting for possible uncertainties due to measurement inaccuracy or the like, the occupation may also be indicated as a probability value p with $0 \leq p \leq 1$.

Then, for each map out of said pair of maps, a first set of grid cells is defined, wherein the first set contains at least all occupied cells, and possibly also other cells (in particular, all cells) of the corresponding map.

For each grid cell out of the first set, a local influence field is defined on the basis of occupied grid cells in a defined vicinity of the corresponding grid cell. This in particular may comprise that for said grid cell, a filter operation and in particular a convolutional filter operation is applied which gathers quantitative information about where in the surroundings of the grid cell out of the first set, there exist other grid cells that are occupied, i.e., in which direction and distance are they located, and how many of these there may be. The filtering operation may employ a Gaussian filtering or a similar filtering with a filter function, and may be in particular performed over a certain filter window as defined vicinity. However, the filtering operation may also be performed without any non-trivial filter function.

The local influence field of a grid cell is designed and configured to be a two-component field in the sense that spatial information on the surroundings of a grid cell out of the first set may be encoded in the two components (which, e.g., may represent two cartesian or components of a field vector, or said field vector given in polar coordinates). E.g., the first field component of the local influence field may be obtained from a weighted (or "filtered") sum of the marginals of all occupied grid cells in one spatial direction (e.g., an x direction), and the second field component may be obtained from another weighted (or "filtered") sum of the marginals of all occupied grid cells in the other spatial direction (e.g., the y direction).

Now, as for each of the reference map and the probe map, the local influence field **frf,** fp with its respective two field components fr1, fr2, fp1, fp2 is determined, the respective field components of the two maps are compared via the application of respective comparison functions, i.e., the first field components fr1, fp1 of the reference map and of the probe map are compared via a comparison function, and the second field components fr2, fp2 of the reference map and of the probe map are compared via another comparison function. The results of these comparisons, i.e., of the application of the respective comparison function to the corresponding field component of the two maps, is a corresponding similarity value for the field components, i.e., a first field component similarity value for the comparison of the respective first field components of the local influence fields of the reference and probe map, and a second field component similarity value accordingly for the comparison of the second field components. The comparison function may be based on a distance of the underlying maps' field components, and may preferably return the corresponding field component similarity value as a function of spatial variables on the grid (i.e., the similarity values may themselves be given by field-like functions or arrays), or else may return a single value valid for the entire map. In particular, a comparison function may take into account a distance of the underlying field components over a specific region of the underlying maps (said specific region being a true subset of either map).

The two similarity functions for the two field components, indicating the similarity and/or distance of the two maps' local force fields for each component (said local force fields in turn indicating the spatial distribution of occupied grid cells) are then combined to form a joint similarity value by means of a suitable mathematical operation that may depend on the nature of the two field components. Said mathematical operation may in particular include a (possibly weighted) sum or a (possibly weighted) sum of logarithms, exponentials, squares or the like of the first and second field component similarity values. In particular, if the first and second field component similarity values are given as functions over the grid (or at least, have any sort of non-trivial spatial dependence), then the joint similarity value may inherit such a spatial dependence.

In contrast to purely distance-based map comparisons, which may capture several different spatial configurations of reference map data objects and corresponding probe map data objects (e.g., tilted objects) into the same distance value, the proposed method allows for a more sound comparison in particular of morphological structures, because the two field components of the local influence fields of the two maps, each of which indicating the morphological relationship of a point of a data object with its surroundings in said data object, allow for a separate assessment of similarity. This can be deduced intuitively if defining the two field components of the local influence fields in polar coordinates, such that a small rotation may be resolved on the level of comparison functions.

In an embodiment, the first and/or second field component similarity values are generated by means of said comparison functions in a way such that the first and/or second field component similarity values have a non-trivial spatial dependence with respect to a position defined in the reference and/or probe map, respectively. This in particular comprises the cases that either the first and/or second field component similarity values are constant over certain given (true) subsets of the reference and probe map (e.g., a quadrant or a higher-order partition), but the values may vary from one subset of grid cells to another, or that the first and second field component similarity values sim1, sim2 are directly given as functions sim1[i,j], sim2[i,j] of coordinates i,j on the grid (i.e., the coordinates of the respective grid cells), in particular with possible variations by design at any coordinate increments i → + 1 or j → j + 1, i.e., in particular, there are no quadrants or similar partitions that by design show a constant similarity value.

Preferably, in this case said joint similarity value is generated by means of said mapping in a way such that the joint similarity value has a non-trivial spatial dependence with respect to a position defined in the reference and/or probe map, respectively. This comprises in particular that if the field component similarity values sim1, sim2 are given as functions sim1[i,j], sim2[i,j] of coordinates i,j on the grid, then the joint similarity value is also given by a function Fsim[i,j] of coordinates i,j on the grid. A non-trivial spatial dependence in said field component similarity values sim1, sim2 and/or said joint similarity value Fsim allows for a better spatial resolution of areas where a mapping quality might still need improvement by possible adjustment of parameters of a higher-order application (such as an alignment and/or fusing method).

Preferably, said joint similarity value is generated from said first and second field component similarity values by means of Fisher's combined probability test as said mapping. Fisher's combined probability test combined several probabilities $p_k$ (k = 1... n) from respective hypothesis tests into one test statistic $X^2_{2n}$ by the formula:

$$X_{2n}^2 = -2 \cdot \sum_{k=1}^{n} ln(p_k)$$

with the natural logarithm ln. In the present case, the application of Fisher's combined probability test to the first and second field component similarity values sim1, sim2 yields

$$Fsim[i,j] = -2 \cdot \sum_{k=1}^{2} ln(simk[i,j])$$

(i)

with the optional spatial dependence on the coordinates i,j.

In an embodiment, for determining said local influence field, a first kernel filter with a first kernel window is applied to each grid cell of the first set, said first kernel filter determining a relation of the corresponding grid cell of the first set with other occupied grid cells in the respective first kernel window. The kernel filter may apply a convolutional filter operation with respect to a filter function, e.g., a Gaussian function or the like, that is truncated to the first filter window, wherein a convolution is preformed over all grid cells of the first kernel window surrounding a specific grid cell of the first set.

Preferably, for a given grid cell $\mathbf{g_0}$ of the first set, said first kernel filter determines a distance vector to any other occupied grid cell $\mathbf{g_{occ,k}}$ in the first kernel window w1, and determines a resulting vector from all distance vectors as said relation. In particular, this may comprise that the relation is given by or at least derived from the sum vector over all distance vectors from the given grid cell to the other occupied grid cells in the first kernel window, i.e., the local influence field fr for said given grid cell $\mathbf{g_0}$ (at coordinates i,j) of the reference map may be given by.

(ii)            $\mathbf{fr}[i,j] = \Sigma_{k \in w1} (\mathbf{g_{occ,k}} - \mathbf{g_0})$,

and an analogous definition may hold for grid cells of the probe map.

In an embodiment, for determining said first field component similarity value and a second field component similarity value, respective statistical hypothesis tests and preferably, non-parametric statistical hypothesis tests, are applied to the first and second components of the local force fields of the reference map and the probe map as said comparison functions. Preferably, said statistical hypothesis tests are configured and designed to test whether two input random variables are distributed according to the same underlying distribution function, and/or return a probability value for the same distribution of the two input random variables. Such a probability value preferably reaches 1 when the two random variables are distributed according to the same distribution function. Then, the first field components fr1, fp1 of the reference map and of the probe map are compared via a first statistical hypothesis test, wherein the resulting probability value for the first field components fr1, fp1 is output as the first field component similarity value sim1 (and likewise for the second field components fr2, fp2) .

It is of further advantage if, for the application of said comparison functions, a second set of grid cells is defined, said second set at least containing each occupied grid cell and preferably any grid cell of the reference map and/or of the probe map, a second kernel filter with a second kernel window w2 is applied to each grid cell of the second set, wherein said second kernel filter performing said statistical hypothesis tests on the respective first field components fr1, fp1 of the local force fields $\mathbf{fr}$, $\mathbf{fp}$ of the reference map and the probe map in the second kernel window w2, and on the respective second field components fr2, fp2 of the local force fields $\mathbf{fr}$, $\mathbf{fp}$ of the reference map and the probe map in the second kernel window w2, yielding said first and second component similarity values sim1, sim2 in dependence on said statistical hypothesis tests. In particular, the second kernel window w2 may be of the same size as the first kernel window w1.

In particular, this comprises that the domain for the statistical hypothesis tests is given by the second kernel window, and the second kernel filter is given by the statistical hypothesis tests themselves. For a given grid cell of the $\mathbf{g_0}$ of the second set (at coordinates i,j), the second kernel window w1 may be given by all grid cells in the index set $i \pm m$, $j \pm n$ with given numbers m, n, resulting in a size of (2m+1)*(2n+1) grid cells for the second kernel window w2. Then, the statistical hypothesis test for the similarity of the first field components fr1, fp1, and for the similarity of the second field components fp1, fp2 are calculated over the second kernel window for $\mathbf{g_0}$ at i,j. By varying the coordinates i,j (and thus, "shifting around" the second kernel window w2), one may obtain said first and second component similarity values sim1, sim2 as spatial distribution functions in dependence of i,j.

Advantageously, respective Kolmogorov Smirnov tests are applied as said statistical hypothesis tests. The Kolmogorov Smirnov test is a statistical hypothesis test that may give a probability for whether two random variables are obeying the same underlying probability distribution. In the present case, this can be achieved by taking over each second kernel window w2 the empirical cumulative distribution functions Dr (x1), Dp (x1) which are defined as the number of grid cells in the second kernel window w2 with a value smaller than or equal to x1 for the first field component of the local force field, preferably normalized by the size of the second kernel window w2. Then, the difference of the empirical cumulative distribution functions is maximized with respect to the argument value x1 of the empirical cumulative distribution functions Dr, Dp in order to obtain the first field component similarity value sim[i,j]:

$$\text{(iii)} \qquad \text{sim}1[i,j] = \sup_{x1} | \, Dr\,(x1) - Dp\,(x1)|,$$

with Dr, Dp defined over w2.

Preferably, said local influence field **fr, fp** is given in polar coordinates [frm, frα], [fpm, fpα] for each of the reference map and the probe map, wherein the first field component is given as a magnitude component m of the local influence field **fr, fp,** and the second field component is given as an angle component α of the local influence field **fr, fp.** This comprises in particular that each of the magnitude and angle field components frm[i,j], frα[i,j] of the local influence field **fr** of the reference map may depend on the particular coordinates i,j on the grid of the reference map (analogous for the probe map). Polar coordinates allow for a better resolution of relative rotations of the probe map with respect to the reference map. While a (small) uniform rotation may lead to lower distance-based similarity scores (as the distances are acquired for any data object), the rotation does only affect the similarity value for the angle component, while it essentially may leave the similarity value for the magnitude component unaffected.

In an embodiment, for providing at least one map out of said reference map and said probe map, a plurality of SDMs is used, each SDM being based on a different data collection process by a motorized vehicle when driving through said bordered traffic area, and said plurality of SDMs is fused into said one map (possibly by a prior alignment of several of said SDMs) such that a data object represented in said one map is based on a corresponding data object of at least one SDM. The data collection process preferably comprises collecting positioning information data on said fixed objects by means of a number of radar sensors and/or a number of lidar sensors and/or a number of cameras of the respective motor vehicle, and further comprises a corresponding evaluation of the collected sensor data with respect to a relative position and/or a relative distance to the motor vehicle.

In particular, both maps out of said pair of maps may be based on a plurality of SDMs from the bordered parking lot, and the plurality of SDMs for one map out of the pair (say, for the reference map) may be exactly equal to the plurality of SDMs for the other map out of the pair (say, for the probe map), e.g., as intermediate maps of an alignment and/or a fusion process for said SDMs at different steps of said process (possibly in order to check for convergence). The pluralities of SDMs might also differ in that these pluralities contain only some maps that are equal while having others which are not, or they may be completely disjunct.

In an embodiment, a parking lot, and in particular an indoor parking lot, is taken as said bordered traffic area. While the proposed method generally has advantages for any type of bordered traffic area where absolute positioning data might be distorted, might fail or not be available, and thus, the comparison of maps may be difficult, this can in particular be the case for parking lots, e.g. between buildings where the resolution of the positioning of a motor vehicle might be slightly distorted (leading to slightly distorted and thus more difficult-to-align SDMs) and specifically indoor parking lots, where a GPS signal is normally not even available.

The invention further discloses a method for aligning and/or fusing a plurality of SDMs, each of which representing a bordered traffic area, wherein from said plurality of SMDs, a number of intermediate maps is generated during the process of aligning and/or fusing, and wherein for a comparison of a mapping quality of an intermediate map with another intermediate map or with an SDM, the method for comparing a mapping quality of a pair of maps as described above is used. The advantages for the method for comparing a pair of maps and for its different embodiments, in particular regarding the evaluation of morphological differences or similarities, may be extended to the above-mentioned method for aligning and/or fusing a plurality of SDMs.

Preferably, in this case, at least one parameter for processing a SDM and/or an intermediate map is changed in dependence on said comparison during said method for aligning and/or fusing a plurality of SDMs. A parameter for processing a SDM and/or an intermediate map in this context may be given by a distance threshold, a convergence threshold, a filter parameter for filtering images of a set of SDMs such as a size of a filter window and/or a filter kernel or a width of a filter function, a size of a subset of an SMD or an intermediate map etc. The comparison method allows for a spatially resolved insight into possible transformation changes of a transformed SDM (or intermediate map) with respect to its original version.

The invention furthermore proposes a system configured to perform a comparison of a mapping quality alignment of a pair of maps, each of which representing a bordered traffic area, said system containing means for retrieving said pair of maps, and computational means configured to compare a mapping quality of a reference map out of said pair with a mapping quality of a probe map out of said pair by performing the method described above. The system according to the invention shares the advantages of the method according to the invention. The advantages stated for the method and for its further developments can be transferred analogously to the system. The system may in particular be given by or implemented in a central computation facility of a manufacturer of the two motorized vehicles, such that the system retrieves the respective maps, at least one of which is generated on the basis of SDMs from all of the manufacturer's cars that are in use, via suitable communication means, and processes them by means of corresponding CPU, RAM and further computational hardware provided by the central computation facility.

In the following, an embodiment of the invention is explained in more detail with the aid of drawings. The drawings show schematically in each case:

Fig. 1     a top view of two motorized vehicles acquiring respective SDMs of an indoor parking lot,

Fig. 2     a top view of data objects in two different maps, at lest one of which is based on the SDMs of Fig. 1, and

Fig. 3     a flow chart of a method for comparing the two maps of Fig. 2.

Corresponding parts and sizes are each provided with the same reference signs in all figures.

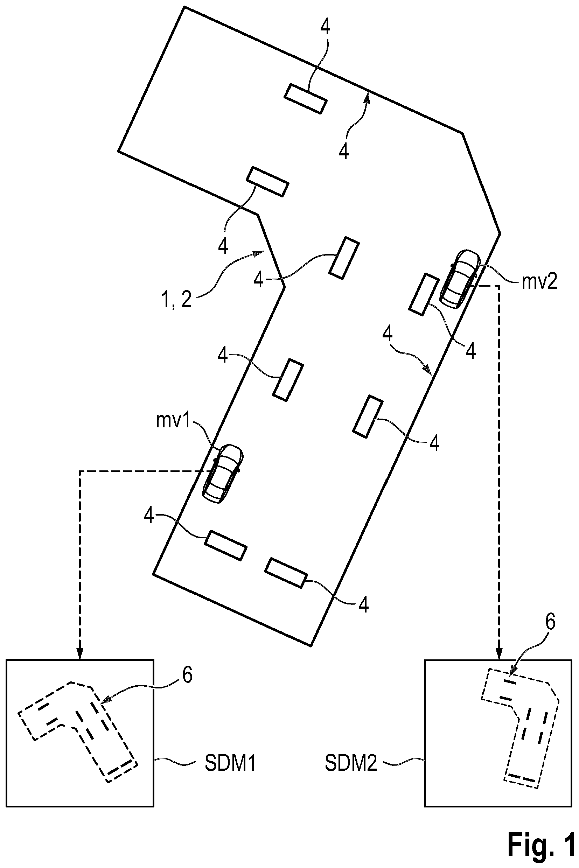

In Figure 1, a schematical top view of a bordered traffic area 1 is shown. In the present case, said bordered traffic area 1 is given by an indoor parking lot 2. The indoor parking lot 2 contains certain fixed objects 4, such as poles, walls, but also parking slots as defined by their delimitations.

A first and a second motorized vehicle mv1, mv2 are both driving through the indoor parking lot 2, possibly at different times. While driving through the indoor parking lot, the first motorized vehicle mv1, by means of its radar sensors (and possibly, its Lidar sensors), is performing a data collection on the fixed objects 4, such that the radar sensors of the first motorized vehicle mv1 (which may be a part of a DAS) generate radar data on the positions of the fixed objects 4. The data on the fixed objects 4 may be evaluated in order to identify the fixed objects 4 in the data. As these are located in the indoor parking lot 2, there is no GPS or similar absolute position data available to link a fixed objects 4 to a specific location. Thus, only odometry data might be available to allow for relative positioning information of the collected radar data.

From said radar data on the spatial distribution of delimitations of the indoor parking lot 2 (in particular, its enclosing walls) and of its (other) fixed objects 4 collected by the two motorized vehicles mv1, mv2, a first SDM (SDM1) and a second SDM (SMD2) are derived, respectively. This can be done by a processing of the collected radar data in the respective motorized vehicle mv1, mv2, generating the corresponding first/second SDM locally, i.e., by means of the onboard data processing hardware of the respective motorized vehicle mv1, mv2.

The first SDM (SDM1) may contain a map of "raw observations" (e.g., radar points etc.) of the indoor parking lot 2 that the first motorized vehicle mv1 has been driving through, or may be pre-processed in a sense that a recognition of data objects 6 corresponding to the fixed objects 4 of the indoor parking lot 2 may have been performed. The data objects 6 may thus be given by an agglomeration of data points, or may be vectorized data, both of which containing information on the presence of a data object 6 at a specific location of the SDM (corresponding to information of the presence of a fixed object 4 at a specific location the indoor parking lot 2).

Please note that the data objects 6 of the first SDM (SDM1) do not necessarily cover all fixed objects 4 of the indoor parking lot 2 (as the first motorized vehicle mv1 possibly did not drive through the entire indoor parking lot 2), and might not correspond exactly to the data objects 6 of the second SDM (SDM2) due to detection noise etc.

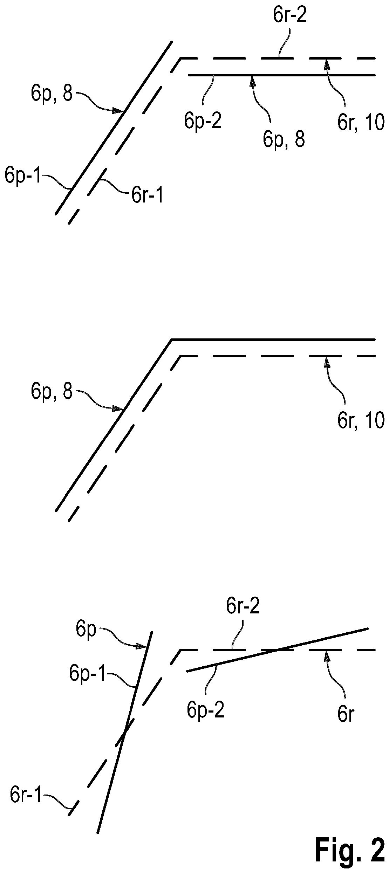

In Figure 2, three different cases of data objects 6p (solid line) of a probe map 8 and corresponding a data object 6r (dashed line) of a reference map 10 are shown in a top view. The data objects 6p of the probe map 8 and the data object 6r of the reference map 10 are all of the object type "wall".

In the top example, the cornered wall represented by the data object 6r is resolved as two different wall sections 6p-1 and 6p-2, wherein each of these wall sections 6p-1 and 6p-2 is essentially parallel to the corresponding wall section 6r-1, 6r-1 of the cornered wall represented by the data object 6r. However, the wall sections 6p-1 and 6p-2 are represented on different sides of the cornered wall represented by the data object 6r.

In the middle example, the data object 6p of the probe map 8 is a simply parallel shifted version of the data object 6r of the reference map 10.

In the bottom example, both of the wall sections 6p-1 and 6p-2 are tilted with respect to their corresponding wall sections 6r-1 and 6r-2 of the data object 6r, without the wall sections 6p-1 and 6p-2 representing the corner of the data object 6r.

Assuming that the reference map 10 does indeed represent the underlying situation of a parking lot 2 containing fixed objects 4 that are represented both in the reference map 10 and in the probe map 8, then distance-based measures for assessing a mapping quality of the probe map with respect to the real situation, i.e., with respect to the reference map 10, and thus, distance-based comparisons of these two maps, will show similarity scores for the three examples that should typically all fall into the same numerical range, i.e., the "distance" of the probe map 8 from the reference map 10 at the data object 6r does not really change in the three mentioned cases, even though a skilled person would typically interpret the example in the middle as the most accurate representation of the fixed object corresponding to the data object 6r, while the top and the bottom examples would normally be considered worse, in particular for the bottom example. Thus, there is a need for a measure of a mapping quality or mapping fidelity that allows for comparing two point clouds or the like, wherein said measure is also designed to capture morphological differences as the ones depicted in the upper and lower example of Figure 2.

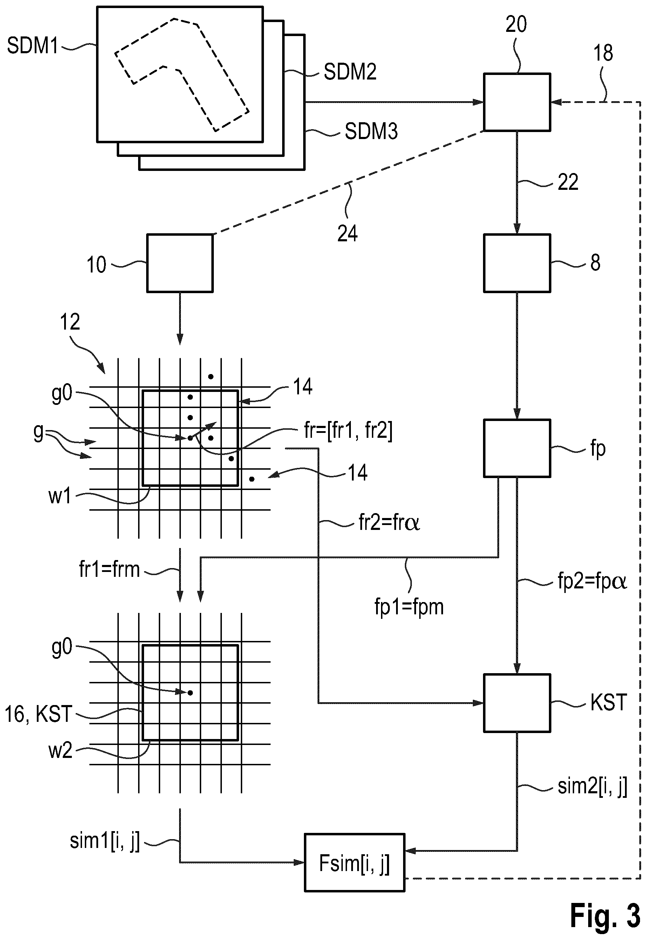

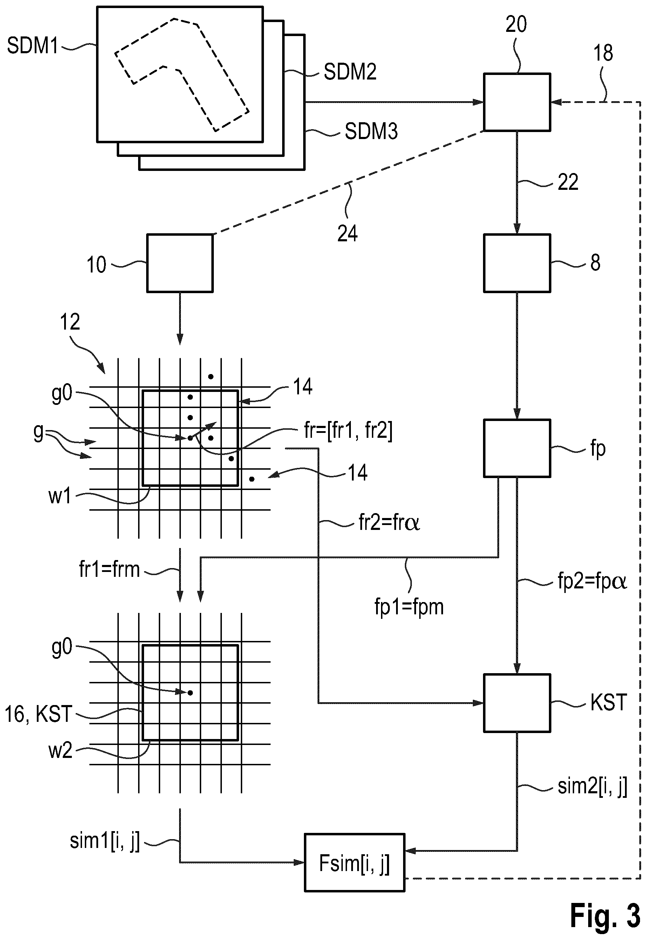

Figure 3 is showing a flow chart of a method for comparing a mapping quality of a probe map 8 with respect to a reference map 10. At least the probe map 8 may be based on a plurality of SDMs (SDM1-SDM3) as the ones acquired according to Figure 1, and may be obtained from said SDMs via fusing 20 (with a possible pre-alignment of a number of the SDMs involved). The probe map 8 may in particular be given as an intermediate map 22 of said fusing 20 (e.g., as a map used during said pre-alignment or the like). Also the reference map 10 may be obtained from said fusing 20 (see dashed line) of said SDMs (SDM1-SDM3), wherein the reference map may be given as an intermediate map 24 from a different step in the fusing process 20. Both the reference map 10 and the probe map 8 shall be given by respective grid maps 12 (shown here for the reference map 10 only) containing a multitude of regular grid cells g.

Now, for the reference map 10, a first set 14 of grid cells is determined, and for a given grid cell g0 out of said first set 14, a local influence field fr is determined by means of a first kernel window w1, wherein all the vectors from the given grid cell g0 to all the other occupied grid cells inside the first kernel window w1 are determined. The local influence field fr of the reference map 10 at the given grid cell g0 is then given by the sum vector of these vectors from said given cell g0 to the other occupied grid cells in the first kernel window w1. In particular, this local influence field fr may be defined for any grid cell g (calculating the vectors to occupied grid cells inside a first kernel window w1 around the corresponding grid cell g, be it occupied or not, and taking the vectorial sum of these vetors as local influence field fr). The local influence field fr due to its nature is a vector field with a first field component fr1 and a second field component fr2, wherein in the present case, polar coordinates shall be used for the representation of said vector field as the local influence field fr, i.e., the first field component fr1 corresponds to a magnitude component frm and the second field component fr2 corresponds to an angle component $fr\alpha$. Due to their construction via the thifted first kernel window w1, both field components frm, $fr\alpha$ in general have a non-trivial spatial dependence on a grid index [i, j]: frm [i, j], $fr\alpha$ [i, j].

The same operations are also performed for the probe map 10, thus yielding a local influence field fp for the probe map 8, with respective first and second field components given by the magnitude and angle component fp1 = fpm, fp2 = $fp\alpha$.

Then, from the two magnitude components frm, fpm of the two local influence fields fr, fp derived for the reference map 10 and the probe map 8, respectively, a first field component similarity value sim1 is calculated by means of a second kernel window w2, wherein for each grid cell g, a Kolmogorov-Smirnov Test KST is performed on the two magnitude components frm [i,j], fpm [i,j] of the two local influence fields fr, fp over the second kernel window w2 around the grid cell g. The Kolmogorov-Smirnov Test KST is performed as a statistical hypothesis test 16 on whether the two magnitude components frm [i,j], fpm [i,j] (interpreted as two different random variables) obey the same underlying distribution function over the second kernel window w2, i.e., [i,j] $\in$ w2. The result of this Kolmogorov-Smirnov Test, as given above by equation (iii), for each grid cell g [i,j] establishes the first field component similarity value sim1 [i,j] for a (local) probability of the two magnitude components frm, frp being actually distributed according to the same underlying probability distribution over the second kernel window w2.

A similar procedure (not shown) is performed for the two angle components $fr\alpha$, $fp\alpha$ of the two local influence fields fr, fp, resulting in a second field component similarity value sim2 [i,j] for a (local) probability of the two angle components $fr\alpha$, $fp\alpha$ being from the same underlying distribution.

In order to have one single value assessing a local similarity between the reference map 10 and the probe map 8, the first and second field component similarity value sim1 [i,j], sim2 [i,j] are then combined by means of Fisher's combined probability test (also known as Fisher's method), as explained in equation (i). The final result is a joint similarity value Fsim [i,j] according to equation (i) which allows for identifying which areas or regions in the two underlying maps 8, 10 are similar to each other, and which parts do have substantial morphological differences. This, in turn, allows for the adjustment of a parameter 18 of the fusing process 20, in order to improve the quality of the fusing process (or, e.g., also to end an iteration loop).

Although the invention has been illustrated and described in more detail by the preferred embodiment example, the invention is not limited by the disclosed examples and other variations may be derived by the skilled person without departing from the scope of protection of the invention.

**Reference Numeral**

| | |
|---|---|
| 1 | bordered traffic area |
| 2 | indoor parking lot |
| 4 | fixed objects |
| 6, 6p, 6r | data objects |
| 6p-1/2 | wall section |
| 6r-1/2 | wall section |

| | |
|---|---|
| 8 | probe map |
| 10 | reference map |
| 12 | grid map |
| 14 | first set |
| 16 | statistical hypothesis test |
| 18 | parameter |
| 20 | fusing/fusing process |
| 22 | intermediate map |
| 24 | intermediate map |
| | |
| fr, fp | local influence field |
| fp1/2 | first/second field component |
| fr1/2 | first/second field component |
| fpm, frm | magnitude component |
| fp$\alpha$, fr$\alpha$ | angle component |
| Fsim | joint similarity value |
| g | grid cell |
| g0 | (specific) grid cell |
| KST | Kolmogorov-Smirnov Test |
| mv1/2 | first/second motorized vehicle |
| | |
| SDM1-3 | first/second single drive map |
| sim1/2 | first/second field component similarity value |
| w1/2 | first/second kernel window |

**Claims**

1. Method for comparing a mapping quality of a pair of maps (8, 10) each of which representing a bordered traffic area (1), one map of said pair being defined as a reference map (10) and the other map being defined as a probe map (8),

   each map (8, 10) containing a plurality of data objects (6, 6p, 6r) associated with corresponding fixed objects (4) of a bordered traffic area (1), wherein at least for one map (8, 10) of said pair of maps, said data objects (6, 6p, 6r) are based on a number of data collections performed by respective vehicles (mv1, mv2) when driving through said bordered traffic area (1),
   wherein for each map (8, 10) of said pair,

   - the map (8, 10) is given as or converted into a respective grid map (12) containing a multiplicity of regular grid cells (g), said data objects (6, 6p, 6r) being represented as occupied grid cells,
   - a first set (14) of grid cells (g) is defined, said first set (14) at least containing all occupied grid cells,
   - wherein for each grid cell (g0) of the first set (14), a respective local influence field (fp, fr) is determined on the basis of occupied grid cells in a defined vicinity of the corresponding grid cell (g0), the local influence field (fp, fr) having a respective first field component (fp1, fr1) and second field component (fp2, fr2),

   wherein respective comparison functions are applied to the respective first field components (fp1, fr1) of the local influence fields (fp,fr) of the reference map (10) and the probe map (8) and to the respective second field components (fp2, fr2) of the local influence fields (fp, fr) of the reference map (10) and the probe map (8), yielding a first field component similarity value (sim1) and a second field component similarity value (sim2), respectively, and
   wherein said first field component similarity value (sim1) and said second field component similarity value (sim2) are combined to a joint similarity value (Fsim) representing a difference in a mapping quality of the reference map (10) with respect to the probe map (8).

2. The method according to claim 1,
   wherein the first and/or second field component similarity values (sim1, sim2) are generated by means of said comparison functions in a way such that the first and/or second field component similarity values (sim1, sim2) have a non-trivial spatial dependence with respect to a position defined in the reference and/or probe map (10, 8), respectively.

3. The method according to claim 2,
wherein said joint similarity value (Fsim) is generated by means of said mapping in a way such that the joint similarity value (Fsim) has a non-trivial spatial dependence with respect to a position defined in the reference and/or probe map (10, 8), respectively.

4. The method according to any of the preceding claims,
wherein said joint similarity value (Fsim) is generated from said first and second field component similarity values (sim1, sim2) by means of Fisher's combined probability test as said mapping.

5. The method according to any of the preceding claims,
wherein for determining said local influence field (fp, fr), a first kernel filter with a first kernel window (w1) is applied to each grid cell (g) of the first set (14), said first kernel filter determining a relation of the corresponding grid cell (g) of the first set with other occupied grid cells (g) in the respective first kernel window (w1).

6. The method according to claim 5,
wherein for a given grid cell (g0) of the first set (14), said first kernel filter determines a distance vector to any other occupied grid cell (g) in the first kernel window (w1), and determines a resulting vector from all distance vectors as said relation.

7. The method according to any of the preceding claims,
wherein for determining said first field component similarity value (sim1) and said second field component similarity value (sim2), respective statistical hypothesis tests (16) are applied to the first and second components (fp1, fr1, fp2, fr2) of the local force fields (fp, fr) of the reference map (10) and the probe map (8) as said comparison functions.

8. The method according to claim 7,

   wherein for the application of said comparison functions

   - a second set of grid cells (g) is defined, said second set at least containing each occupied grid cell (g) of the reference map (10) and/or of the probe map (8),
   - a second kernel filter with a second kernel window (w2) is applied to each grid cell (g) of the second set, wherein
   - said second kernel filter performing said statistical hypothesis tests (16) on the respective first field components (fp1, fr1) of the local force fields (fp, fr) of the reference map (10) and the probe map (8) in the second kernel window (w2), and on the respective second field components (fp2, fr2) of the local force fields (fp, fr) of the reference map (10) and the probe map (8) in the second kernel window (w2),

   yielding said first and second component similarity values (sim1, sim2) in dependence on said statistical hypothesis tests (16).

9. The method according to claim 8,
wherein respective Kolmogorov Smirnov tests (KST) are applied as said statistical hypothesis tests (16).

10. The method according to any of the preceding claims,

    wherein said local influence field (fp, fr) is given in polar coordinates, and
    wherein the first field component (fp1, fr1) is given as a magnitude component (fpm, frm) of the local influence field (fp, fr), and the second field component (fp2, fr2) is given as an angle component (fp$\alpha$, fr$\alpha$) of the local influence field (fp, fr).

11. The method according to any of the preceding claims,
wherein for providing at least one map (8, 10) out of said reference map (10) and said probe map (8),

    - a plurality of single drive maps (SDM1-3) is used, each single drive map (SDM1-3) being based on a different data collection process by a vehicle (mv1, mv2) when driving through said bordered traffic area (1), and
    - said plurality of single drive maps (SDM1-3) being fused into said one map (8, 10) such that a data object (6, 6p, 6r) represented in said one map (8, 10) is based on a corresponding data object (6) of at least one single drive map.

**12.** The method according to any of the preceding claims,
wherein a parking lot (2) is represented as said bordered traffic area (1).

**13.** A method for aligning and/or fusing (20) a plurality of single drive maps (SDM1-3) each of which representing a bordered traffic area (1),
wherein from said plurality of single drive maps (SDM1-3), a number of intermediate maps (22, 24) is generated during the process of aligning and/or fusing (20), and wherein for a comparison of a mapping quality of an intermediate map (22, 24) with another intermediate map (22, 24) or with one of said single drive maps (SDM1-3), the method according to one of the preceding claims is used.

**14.** The method according to claim 13,
wherein at least one parameter (18) for processing a single drive map (SDM1-3) and/or an intermediate map (22, 24) is changed in dependence on said comparison.

**15.** A system configured to perform a comparison of a mapping quality alignment of a pair of maps (8, 10), each of which representing a bordered traffic area (1),
said system containing means for retrieving said pair of maps (8, 10), and computational means configured to compare a mapping quality of a reference map (10) out of said pair with a mapping quality of a probe map (8) out of said pair by performing the method according to any of claims 1 to 12.

**Fig. 1**

**Fig. 2**

Fig. 3

**Fig. 3**

Europäisches
Patentamt

European
Patent Office

Office européen
des brevets

# EUROPEAN SEARCH REPORT

**Application Number**

EP 24 21 7375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/143647 A1 (WANG QUAN [US] ET AL) 24 May 2018 (2018-05-24) | 1-12,14, 15 | INV. G01C21/00 |
| A | * paragraphs [0024], [0031], [0060], [0064], [0121]; figures 4A,4B * | 13 | |
| | ----- | | |

**TECHNICAL FIELDS SEARCHED (IPC)**

G01C
G01S

The present search report has been drawn up for all claims

| Place of search | Date of completion of the search | Examiner |
|---|---|---|
| The Hague | 3 April 2025 | de la Rosa Rivera, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 7375

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2025

| Patent document cited in search report | Publication date | Patent family member(s) | | Publication date |
|---|---|---|---|---|
| US 2018143647 A1 | 24-05-2018 | CN | 108089572 A | 29-05-2018 |
| | | EP | 3327464 A1 | 30-05-2018 |
| | | JP | 6644742 B2 | 12-02-2020 |
| | | JP | 2018084573 A | 31-05-2018 |
| | | US | 2018143647 A1 | 24-05-2018 |
| | | US | 2020192402 A1 | 18-06-2020 |

EPO FORM P0459

For more details about this annex : see Official Journal of the European Patent Office, No. 12/82